# EUROPEAN PATENT SPECIFICATION

(11) **EP 0 803 962 B1**
(45) Date of publication and mention of the grant of the patent: **20.09.2000**
(21) Application number: 97830168.7
(22) Date of filing: 14.04.1997
(51) Int. Cl.: H02K 1/27

(54) **Polar package construction for permanent magnet rotors of alternators and the like**
Blechpaket für Dauermagnetrotoren für Generatoren oder dergleichen
Paquet de tôles de rotor pour rotors à aimants permanents pour alternateurs ou similaires

(30) Priority: 23.04.1996 IT MI960314 U
(43) Date of publication of application: 29.10.1997
(73) Proprietor: Bamo Elettroutensili S.r.l., 20052 Monza (Milano) (IT)
(72) Inventor: Banzi, Ferruccio, c/o BAMO Elettroutensili S.R.L., 20052 Monza, (Milano) (IT)
(74) Representative: Cicogna, Franco

(56) References cited:
- EP-A- 0 031 047
- FR-A- 2 629 286
- GB-A- 2 062 977
- JP-A- 63 140 644
- US-A- 4 631 807
- US-A- 4 658 167
- PATENT ABSTRACTS OF JAPAN vol. 012, no. 337 (E-657) 12 September 1988 & JP 63 099 749 A (FANUC LTD) 02 May 1988
- PATENT ABSTRACTS OF JAPAN vol. 012, no. 397 (E-672) 21 October 1988 & JP 63 140 644 A (FUJI ELECTRIC CO LTD) 13 June 1988
- PATENT ABSTRACTS OF JAPAN vol. 009, no. 031 (E-295) 09 February 1985 & JP 59 175 363 A (MEIDENSHA KK) 04 October 1984

## Description

### BACKGROUND OF THE INVENTION

The present invention relates to a polar package construction for permanent magnet rotors of alternators and the like.

As is known, the permanent-magnet rotors included in alternators and the like electrical machines, are made of a ferromagnetic material body defining a plurality of radially extending slots in which are engaged the permanent magnets so as to provide the desired number of poles for the alternator rotor.

Prior embodiments of these rotors generally cause a comparatively high loss of electric current because of parasitic phenomena, with a consequent high heat generation which, in addition to lowering the efficiency of the alternator, will generate great operating problems.

The document FR-2 629 286 A discloses a polar package construction having substantially the features of the preamble of claim 1.

The document Patent Abstracts of Japan, vol. 012, No. 337 (E-657), 12.09.1998 & JP 63 099849 A (FANUC LTD), 02.05.1988 discloses a rotor with a coupling flange having an end piece and, more specifically, this document teaches that a single such flange suffices, since the end piece of this document transmits the rotor torque to the shaft.

Finally, the document Patent Abstracts of Japan, vol.012, No. 397 (E-672), 21.10.1998 & JP 63 140644 A (FUJI ELECTRIC CO. LTD.), 13.06.1988 teaches that a sinusoidal voltage wave shape can be obtained by increasing the thickness of the air gap near the permanent magnets but this document does not appear to suggest that this can be achieved by milling portions of the package surface.

### SUMMARY OF THE INVENTION

Accordingly, the aim of the present invention is to overcome the above mentioned problems, by providing a polar package construction for permanent magnet rotors of alternators and the like, which allows to overcome the heat loss occurring during the operation of the alternator, thereby greatly increasing the efficiency thereof.

Within the scope of the above mentioned aim, a main object of the present invention is to provide such a polar package construction which is very simple construction wise and allows to easily provide the required type of polar package, by simply assembling conventional ferromagnetic laminations.

Yet another object of the present invention is to provide such a polar package construction which is very reliable and safe in operation, can be easily made starting from easily commercially available elements and materials and which, moreover, is very competitive from a mere economic standpoint.

According to one aspect of the present invention, the above mentioned aim and objects, as well as yet other objects, which will become more apparent hereinafter, are achieved by a polar package construction, for permanent magnet rotors for alternators and the like, according to claim 1.

### BRIEF DESCRIPTION OF THE DRAWINGS

Further characteristics and advantages of the invention will become more apparent hereinafter from the following detailed disclosure of a polar package construction for permanent magnet rotors of alternators and the like, according to the invention, which is illustrated, by way of an indicative, but not limitative example, in the accompanying drawings, where:

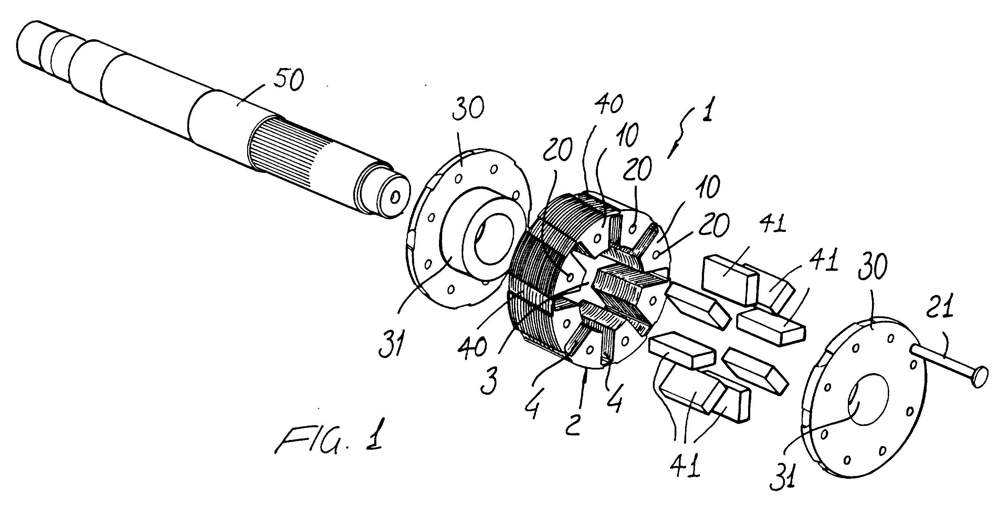

Figure 1 is a schematic exploded perspective view illustrating the polar package construction according to the present invention; and
Figure 2 is a cross-sectional view of the rotor, as substantially taken along a section plane perpendicular to the rotor axis.

### DESCRIPTION OF THE PREFERRED EMBODIMENTS

With reference to the number references of the above mentioned figures, the polar package construction for permanent magnet rotors of alternators and the like, according to the present invention, which has been generally indicated by the reference number 1, comprises a plurality of ferromagnetic laminations or sheet metal elements 2, which have a substantially disc-like configuration and are made by suitably cutting a ferromagnetic sheet metal member, so as to provide laminations having an aperture 3 at their central region, therefrom extends a plurality of radial slots 4.

Thus, the laminations will define trapezoidal portions 10, the bases of which, forming the inner and outer sides, will have a curved configuration.

More specifically, the trapezoidal elements, which are separated by the radially extending slots 4, will form the poles of the rotor and, in actual practice, are formed by the single-piece laminated element.

Each lamination, having the above disclosed configuration, is superimposed on other like shape laminations so as to provide polar packages having any set desired thickness.

Through the above mentioned trapezoidal portions a plurality of throughgoing holes 20 are provided, said throughgoing holes providing respectively seats for engaging thereon nails, rivets or bolts 21 for packaging and mutually connecting the several laminations 2, thereby providing a polar package having the desired package size.

As shown, the laminations 2 are coupled to one another by coupling flanges 30, arranged at the axial end portions thereof, which are both provided with a central end piece 31, arranged at the inner edges of the polar shoes and operating as a restraining element for restraining at their set positions the permanent magnets 41.

More specifically, the flanges 30 are also coupled by nails, rivets or bolts 21, which are engaged in the holes 20; the polar package being then keyed on a shaft 50, for providing the rotor.

The thus made alternator rotor, comprising a polar package including a plurality of superimposed and separated ferromagnetic laminations 2, which are separated, as it is conventional, by an insulating paint layer, has the great advantage of drastically reduce possible parasitic currents, thereby no loss heat is generated, thereby providing a very high efficiency alternator.

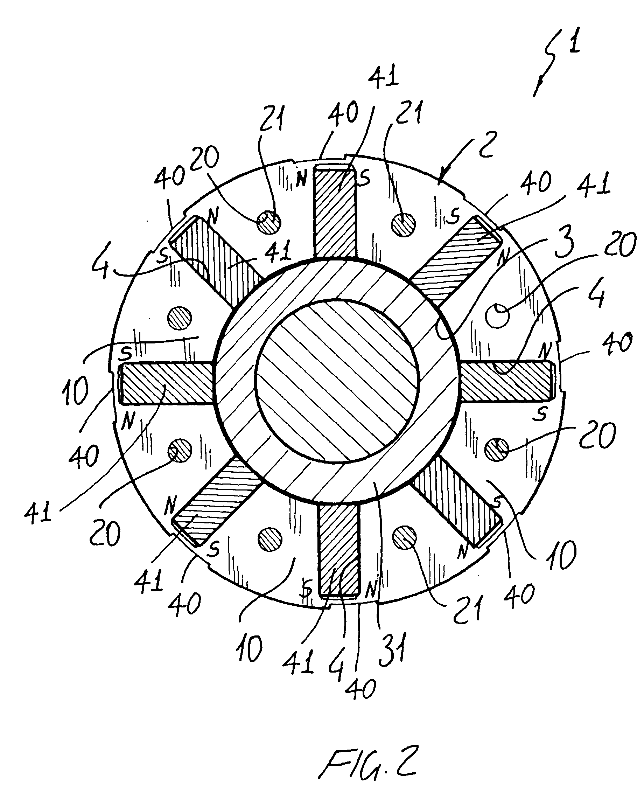

The above sinterized permanent magnets 41, in particular, are housed in the radially extending slots 4 so as to present equal polarity adjoining faces, according to the procedure and arrangement clearly shown in figure 2.

In particular, the sinterized permanent magnets 41 are always properly housed in their respective radially extending slots 4, so as to provide a single piece assembly which is very advantageous from an operating and practical standpoint.

In this connection it should be also pointed out that the package formed by the mentioned magnetic laminations 2, and also including the coupling flanges, will be provided with a plurality of surface milled cut-outs 40, arranged near the permanent magnets 41, at the cylindric surface thereof; these surface milled portions, in particular, will have any desired and set suitable width and slanting, so as to provide a truly sinusoidal voltage wave shape.

Moreover, since the magnetic package has a closed configuration, it will prevent dirt from entering the package thereby providing a rotor of improved operative characteristics.

From the above disclosure it should be apparent that the invention fully achieves the intended aim and objects.

In particular, it is to be pointed out that a polar package has been provided which is very functional from a mere operating standpoint, and which, moreover, since it is constituted by simply die-cut superimposed laminations, will have very good mechanical and electrical features.

In practicing the invention, the used materials, provided that they are compatible to the intended use, as well as the contingent size and shapes, can be any, depending on requirements.

## Claims

1. A polar package construction (1), for permanent magnet rotors for alternators and the like, comprising a plurality of ferromagnetic laminations (2), having a disc-like configuration, with die-cut regions defining a central aperture (3), from which extends a plurality of radial slots (4) closed at their radially outer ends, the parts of each lamination between adjacent slots forming trapezoidal portions (10) with curved radially inner and outer bases, said laminations (2) being mutually piled and packaged so as to provide a set thickness polar package, permanent magnets (41) being engaged in said radial slots (4), said polar package comprising, at said trapezoidal portions (10), throughgoing holes (20) for engaging therein clamping elements (21), said polar package comprising moreover two coupling flanges (30) arranged at the axial end portions thereof and coupled by said clamping elements, characterized in that said two coupling flanges (30) are made of an aluminium material and provided with a respective end piece (31) which can be engaged with an inner edge of said trapezoidal portions (10).

2. A polar package construction, according to Claim 1, characterized in that said coupling elements (21) comprise nails, rivets or bolts, also clamping said flanges (30).

3. A polar package construction, according to Claims 1 and 2, characterized in that said trapezoidal portions (10) define the number of the poles of the rotor.

4. A polar package construction, according to Claim 1, characterized in that said polar package is keyed on a rotor shaft (50).

5. A polar package construction, according to one or more of the preceding claims, characterized in that said package comprises a plurality of sinterized permanent magnets (41) which are housed in said radially extending slots (4) so as to present equal polarity adjoining faces.

6. A polar package construction, according to one or more of the preceding claims, characterized in that said magnetic lamination package, together with the flanges therefor, is provided with a plurality of surface milled portions (40), arranged near said permanent magnets (41), at the cylindric surfaces thereof.

7. A polar package construction, according to claim 6, characterized in that said surface milled portions (40) have a set width and slanting, so as to provide a sinusoidal voltage wave shape.

## Patentansprüche

1. Blechpaket (1) für Dauermagnetrotoren für Generatoren und dergleichen, mit einer Vielzahl ferromagnetischer Rotorbleche (2), die eine scheibenförmige Konfiguration mit gestanzten Bereichen aufweisen, die eine mittige Öffnung (3) definieren, von der sich eine Vielzahl von Radialschlitzen (4) erstreckt, die an ihren äußeren Radialenden geschlossen sind, wobei die Teile jedes Rotorblechs zwischen nebeneinanderliegenden Schlitzen trapezförmige Teile (10) mit gekrümmten, radialen, inneren und äußeren Basen bilden, wobei die Rotorbleche (2) so aufeinandergeschichtet und gepackt sind, daß sie ein Blechpaket mit vorgegebener Dikke definieren, wobei Dauermagnete (41) in den Radialschlitzen (4) in Eingriff stehen, wobei das Blechpaket in den trapezförmigen Teilen (10) Durchgangslöcher (20) aufweist, in die Befestigungselemente (21) eingreifen, wobei das Blechpaket darüber hinaus zwei Koppelungsflansche (30) aufweist, die an dessen Axialendteilen angeordnet und mittels den Befestigungselementen gekoppelt sind,
**dadurch gekennzeichnet,** daß
die zwei Koppelungsflansche (30) aus einem Aluminiummaterial hergestellt und jeweils mit einem Endstück (31) versehen sind, das mit einer Innenkante der trapezförmigen Teile (10) in Eingriff bringbar ist.

2. Blechpaket nach Anspruch 1,
**dadurch gekennzeichnet,** daß
die Koppelungselemente (21) Nägel, Nieten oder Bolzen umfassen, die ebenfalls die Flansche (30) klemmen.

3. Blechpaket nach den Ansprüchen 1 und 2,
**dadurch gekennzeichnet,** daß
die trapezförmigen Teile (10) die Anzahl der Pole des Rotors definieren.

4. Blechpaket nach Anspruch 1,
**dadurch gekennzeichnet,** daß
das Blechpaket auf eine Rotorwelle (50) aufgekeilt ist.

5. Blechpaket nach einem oder mehreren der vorstehenden Ansprüche,
**dadurch gekennzeichnet,** daß
das Blechpaket eine Vielzahl gesinterter Dauermagnete (41) aufweist, die in den sich radial erstreckenden Schlitzen (4) untergebracht sind, um aneinandergrenzende Flächen gleicher Polarität darzustellen.

6. Blechpaket nach einem oder mehreren der vorstehenden Ansprüche,
**dadurch gekennzeichnet,** daß
das magnetische Blechpaket gemeinsam mit den dazugehörigen Flanschen eine Vielzahl an der Oberfläche gefräste Bereiche (40) aufweist, die in der Nähe der Dauermagnete (41) an deren zylindrischen Oberflächen angeordnet sind.

7. Blechpaket nach Anspruch 6,
**dadurch gekennzeichnet,** daß
die an der Oberfläche gefrästen Bereiche (40) eine vorgegebene Breite und Abschrägung aufweisen, um einen sinusförmigen Spannungsverlauf zu bieten.

## Revendications

1. Construction polaire intégrée ("polar package construction") (1), pour rotors à aimant permanent pour alternateurs et similaires, comprenant plusieurs stratifications ferromagnétiques (2), présentant une configuration en forme de disque, avec des régions découpées définissant un orifice central (3), à partir duquel s'étendent plusieurs fentes radiales (4) fermées à leurs extrémités externes radiales, les parties de chaque stratification entre les fentes adjacentes formant des parties trapézoïdales (10) avec des bases internes et externes radialement courbées, lesdites stratifications (2) étant mutuellement empilées et conditionnées de manière à fournir une construction polaire intégrée d'épaisseur déterminée, des aimants permanents (41) étant engagés à l'intérieur desdites fentes radiales (4), ladite construction polaire intégrée comprenant, sur lesdites parties trapézoïdales (10), des orifices traversant celles-ci (20) pour engager à l'intérieur des éléments de serrage (21), ladite construction polaire intégrée comprenant de plus deux brides de couplage (30) disposées aux extrémités axiales de celle-ci et couplées avec lesdits éléments de serrage, caractérisée en ce que ces deux brides de couplage (30) sont fabriquées en un matériau d'aluminium et munies respectivement d'une pièce d'extrémité (31) qui peut être engagée sur un bord interne desdites parties trapézoïdales (10).

2. Construction polaire intégrée, selon la revendication 1 caractérisée en ce que lesdits éléments de couplage (21) comprennent des clous, des rivets ou des boulons, également le serrage desdites brides (30).

3. Construction polaire intégrée, selon la revendication 1 et 2, caractérisée en ce que lesdites parties trapézoïdales (10) définissent le nombre de pôles du rotor.

4. Construction polaire intégrée, selon la revendication 1, caractérisée en ce que ladite construction polaire intégrée est solidaire ("is keyed on") de l'arbre du rotor (50).

5. Construction polaire intégrée, selon l'une quelconque des revendications précédentes caractérisée en ce que ladite construction comprend plusieurs aimants permanents frittés (41) qui sont logés à l'intérieur desdites fentes (4) s'étendant radialement de manière à présenter des faces contiguës de polarité égale.

6. Construction polaire intégrée, selon l'une quelconque des revendications précédentes caractérisée en ce que la construction de stratifications magnétiques, ensemble avec les brides, est munie de plusieurs parties crénelées ("milled") en surface (40), disposées près desdits aimants permanents (41), aux surfaces cylindriques de ceux-ci ("thereof").

7. Construction polaire intégrée, selon la revendication 6 caractérisée en ce que lesdites parties crénelées en surface (40) présentent une largeur et une inclinaison déterminées, de manière à fournir une forme d'onde en tension sinusoïdale ("sinusoïdal voltage wave shape").
